# EUROPEAN PATENT SPECIFICATION

(11) **EP 1 508 437 B1**
(45) Date of publication and mention of the grant of the patent: **16.10.2013**
(21) Application number: 04077311.1
(22) Date of filing: 13.08.2004
(51) Int. Cl.: B32B 7/08, B29C 37/00, B29C 65/56, B01L 1/00, G01N 1/10

(54) **Housing with sandwich structure and a method of fabricating thereof**
Gehäuse mit Sandwichstruktur und Verfahren zur Herstellung
Boitier à structure sandwich et procédé de fabrication

(30) Priority: 14.08.2003 NL 1024112
(43) Date of publication of application: 23.02.2005
(73) Proprietor: Verkroost, Paulus Arthur Ubald Lucas, 4133 HC Vianen (NL)
(72) Inventor: Verkroost, Paulus Arthur Ubald Lucas, 4133 HC Vianen (NL)
(74) Representative: Hylarides, Paul Jacques

(56) References cited:
- BE-A- 886 096
- DE-C- 19 734 803
- FR-A- 2 220 377
- GB-A- 2 143 465
- US-A- 4 560 607
- US-B1- 6 190 755

## Description

The present invention relates to a housing generally and to a housing for holding a fluid sampler in particular. The invention also relates to a method for manufacturing a sandwich wall construction generally and a sandwich wall construction for said housing in particular.

Many types of sampler are known for monitoring the quality of industrial wastewater. These samplers take samples periodically or continuously from industrial or other waste flows, such as wastewater or residual gases. Many per se known techniques can be applied for taking a sample. The choice of technique here depends partly on the degree and type of contamination of the waste flow. Use can for instance be made of vacuum suction equipment in sampling open channels, while for extraction from closed conduits use is for instance made of flushing systems. Such samplers are usually arranged outside in housings specially intended for the purpose.

Since the housings are often arranged in the outside air, they are subject to the influences of highly variable weather conditions. The housing must therefore be able to withstand ambient air temperatures varying between about -20°C and +40°C. Due to solar insolation however, the temperature of the housing can nevertheless rise above 40°C. In some applications the samples taken must furthermore be stored at a relatively low ambient temperature. A cooling system is therefore arranged in such housings which ensures that the temperature within the housing is held at a value of about 2 to 5°C.

Housings are known which are manufactured from a sandwich construction consisting of two polyethylene sheets with a core of polyurethane (PUR) therebetween. As a result of the temperature differences which occur on the outer surface of the housing and the inner temperature of the housing which is held in many cases at least relatively low and in any case substantially constant, the existing housings are subject to high expansion and contraction forces. These forces form a particular problem when the different components of the housing, such as the walls and the core, are made from different materials with different expansion characteristics. Owing to the frequent expansion and contraction of the outer wall, while the inner wall expands or contracts little due to the uniform temperature, stresses occur in the core of the sandwich construction such that in practice the housings already break up after a relatively short time, for instance because the outer wall detaches wholly or partially from the core.

From GB-21543465 a tubular extruded body is known, into which a cellular plastic filling is injected, where an extrusion core has grooves to generate point-shaped roughnesses.

It is an object of the present invention to provide a housing of the above stated type which can better withstand the stresses occurring in the housing due to the influence of changing temperatures.

It a further object of the invention to provide a method for manufacturing a housing assembled from a sandwich wall construction.

According to a first aspect of the invention this object is achieved in a housing according to claim 1.

The invention is based on the insight that, in order to make the housing better able to withstand changing ambient temperatures, the adhesion between particularly the outer wall of the housing and the core of the sandwich construction must be improved. In order to improve the adhesion a number of reinforcing elements are arranged according to the invention against the inner surface of the outer wall. The reinforcing elements extend into the core of the sandwich construction connecting onto the inner surface. The consequence hereof is that the core and the outer wall no longer become detached from each other, or at least do so less easily. This results in a greatly increased lifespan of the housing, which results in a saving not only of manufacturing costs but also of labour costs for erecting the housing.

According to another aspect of the invention, there is provided a method for manufacturing walls of a housing according to claim 10.

Further advantages, features and details of the present invention will be elucidated on the basis of the following description of a preferred embodiment thereof. Reference is made in the description to the figures, in which:
Figure 1 shows a view in perspective of a preferred embodiment of a thermoplastic housing according to the invention;
Figures 2a-2f show the different stages during the manufacture of a sandwich element according to the invention; and
Figure 3 shows a cross-section of a construction element manufactured in accordance with the method of figures 2a-2f.

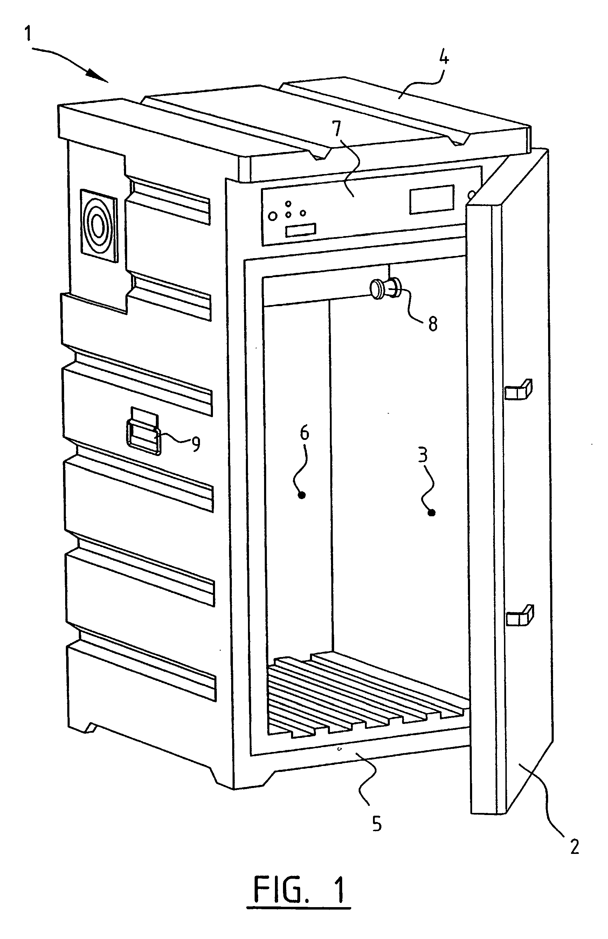

Figure 1 shows a view in perspective of a housing 1 according to the invention. Housing 1 is constructed from a wall or door 2 for removal, upright side walls 3, a rear wall 6, an upper wall 4 and a lower wall 5. All said walls 2-6 are manufactured in accordance with the sandwich construction described below. In some cases however, only some of the walls are embodied in such manner. It is not necessary in all cases to embody for instance the lower wall or bottom 5 with the reinforced sandwich construction according to the invention, since little temperature influence is exerted on this wall from outside.

The housing comprises a compartment 7 in which the different control units, for instance a control for the water sampler (not shown), are enclosed. Provided thereunder is a hollow space in which a sampler can be arranged. The sampler is herein connected to a passage 8 through wall 3 of the housing, which passage has the function of providing a connection between the sampler inside the housing and the wastewater outside which is to be monitored.

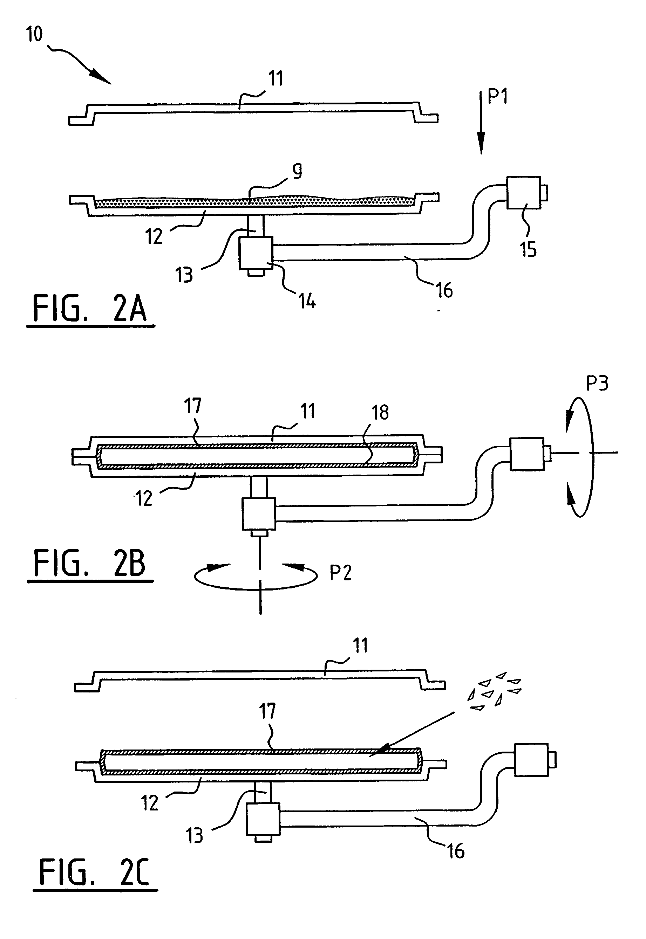

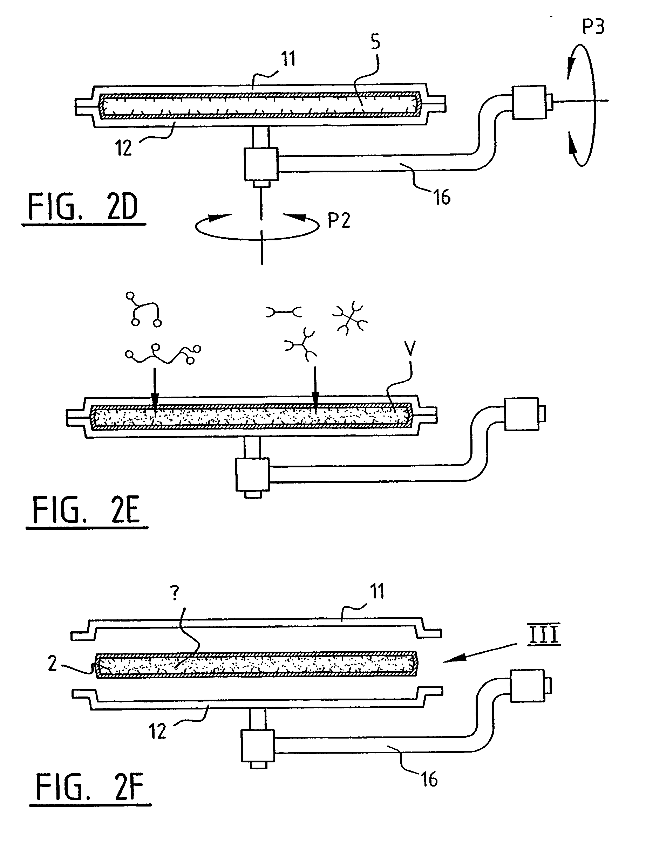

Figures 2a-2f show the different steps of the manufacturing process of the different walls 2-6 of the housing. Set forth in the figures is the manufacture of flat walls. It is however equally well possible to provide the walls with grooves (as shown in figure 1) or to manufacture two or more walls simultaneously. It is even possible to embody a number of the walls (for instance side walls 3, rear wall 6, lower wall 5 and upper wall 4) or the whole housing in a single fabrication process. For the sake of simplicity however, the description is limited to the manufacture of a flat wall.

Figures 2a-2f show a rotation moulding process with which the sandwich elements can be manufactured. Although different methods of manufacturing a housing according to the invention are possible, the rotation moulding process shown in the figures has the advantage over many other processing techniques for plastic that the products resulting from the manufacturing process are seamless and practically stress-free.

Only the part of the rotation moulding machine 10 with which the rotation moulding process is carried out that is relevant to the invention is shown. The other parts, such as for instance the different drive motors, the heating means and the control, are omitted from the figures for the sake of simplicity.

The mould of the machine is assembled from an upper mould part 11 and a lower mould part 12. Lower mould part 12 is attached fixedly to a rotation shaft 13 mounted rotatably in a support 14. Shaft 13 is rotatable using means which are not shown, whereby a rotation in the horizontal plane (arrow P₂ in figure 2b) can be imparted to the mould. Support 14 is in turn attached fixedly to a second rotation shaft 16 mounted rotatably in a second support 15. The second rotation shaft 16 is rotatable using means which are not shown, whereby a rotation in the vertical plane (arrow P₃ in figure 2b) can be imparted to the mould.

Mould 11,12 is first of all filled with a measured quantity of a pre-prepared mixture or granulate g of, among other things, plastic powder, preferably polyethylene powder, and optionally a dye to give the mixture a desired colour. Mould parts 11 and 12 are then pressed against each other (arrow P₁ in figure 2a).

Mould 11,12 can be preheated at determined positions with a gas burner before the mould is placed into an oven (not shown), with the purpose of obtaining a better melt. This is however not always necessary.

Once the mould has been arranged in the oven, the mould rotates during heating about the two mutually perpendicular shafts 13 and 16 (arrows P₂ and P₃ in figure 2b) so that the force of gravity ensures that every part of the mould wall comes into contact with the plastic. The temperature of the oven here depends on the product to be made, but on average it lies between 240 and 300°C. The rotation speeds are here kept low to prevent centrifugal effects as much as possible.

The granulate g thus forms a closed, hollow product against the hot mould wall. This is shown in figure 2b, in which it can clearly be seen that, owing to the two rotation movements, granulate g collects against the mould walls, whereby a continuous upper wall 17 and lower wall 18 are formed. In order to give the product the desired structural strength and to moreover bring the thermal insulation of the product to a higher level, filler material is injected into the hollow product, i.e. between outer wall 17 and inner wall 18. Such double-walled products can generally be provided with foam of polyethylene or polyurethane (PUR foam). According to the shown preferred embodiment, polyurethane (PUR) foam is applied in the double-walled products.

The polyethylene is generally used to strengthen the product, while the polyurethane is generally used to insulate the products. Both foams have their own processing method. PE foam is obtained by introducing between the two walls of the product a special PE powder through which a blowing agent is mixed. The product for filling is situated in the mould to prevent the product deforming due to the foam and to "bake" the foam in the oven. Under the influence of the high temperature in the oven the blowing agent mixed through the PE powder transforms from the solid to the gaseous phase and provides the foaming effect.

The application of PUR foam according to the invention has another processing method however. The PUR foam is created by combining two components: an isocyanate and a polyol (as shown in figure 2e). The two components are injected into the double wall of the product during the manufacturing process, as indicated with arrows in figure 2e.

During the process the product for filling is otherwise situated in the mould in order to prevent the product deforming or bursting apart. Possibly excessive PUR foam and air can escape through venting openings made in the product.

As discussed above, the adhesion of PUR foam to plastic in general and polyethylene in particular is not optimal due to the often "greasy" surface of the plastic wall (made from polyethylene PE). If a product filled with PUR foam now stands in the sun, the thermoplastic upper wall 17 and/or lower wall 18 will expand. The PUR core is however more form-retaining, so that the relevant wall detaches from the PUR core.

Before the filler material is injected into the mould (figure 2e), the mould parts 11 and 12 are therefore released from each other and plastic reinforcing elements s, such as fibres and/or chippings or grains (diameter 2 to 3 mm) are arranged in the still hollow product (figure 2c). While the walls are already formed at this stage of manufacture, they are still in a plastic phase. When the reinforcing elements are added, they have a relatively low temperature, such as close to room temperature. The material of the reinforcing elements is moreover chosen such that the melting temperature of the plastic reinforcing elements s is almost the same as that of the plastic of the wall (preferably PE). The reinforcing elements s hereby retain their form but the outer ends do fuse to the relevant plastic wall.

Moulds 11 and 12 are then reclosed (figure 2d) and rotated in the above mentioned rotation directions (arrows P₂ and P₃). This provides for a uniform distribution of the reinforcing elements over the inner surface of walls 17, 18 of the product.

Reinforcing elements s have an elongate form in one of the present preferred embodiments, wherein one outer end of a reinforcing element becomes fixedly attached to the wall. The other ends herein become freely suspended in the hollow space (figure 2d). When the product is now foamed at the stage of manufacture shown in figure 2e, the foam creeps between the reinforcing elements so that a reinforcement as it were results which connects the PUR foam practically non-releasably to the plastic wall 17,18. A similar process takes place when, in another preferred embodiment, granular reinforcing elements are arranged instead of elongate elements. The grains can have a varying size, but preferably have a size of several mm (2-3 mm).

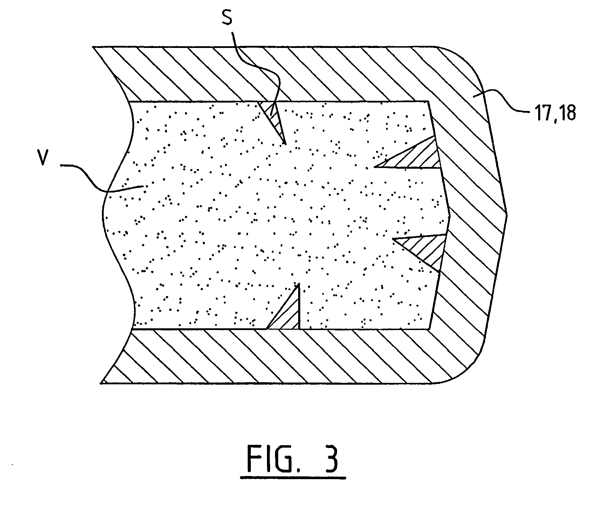

The foregoing is shown in more detail in figure 3. It can be seen that the reinforcing elements, drawn here in the form of four chippings s, protrude outside the inner surface of wall 17,18 and that the filler material v wholly surrounds reinforcing elements s. The adhesion is hereby so strong that, when the product is heated on two sides, the wall 17,18 does not detach from the PUR core. It has been found that the adhesion is moreover so strong that, even when the product is heated on one side, the wall does not detach from the core.

After being removed from the oven, the moulds are cooled using large fans and/or water. The moulds still rotate on shafts 13 and 16 during the cooling. As a result of the cooling the product becomes rigid, and can be removed from the mould. A number of products are then further treated with foam and/or provided with hinges and locks.

The housings in which the fluid samplers (for taking liquid and/or gas samples) characteristically have dimensions of between 0.5 mm and 1.5 mm. Housings can for instance be envisaged with dimensions of 60 x 60 x 110 cm and 90 x 90 x 100 cm. The total thickness of the sandwich construction is about 4-8 cm, wherein the walls themselves have a thickness of about 3-4 cm (maximum 6 mm walls).

Further data relating to samplers arranged in the housings can be found in the relevant literature. The international standards ISO 5667-2 and 5667-10 can also provide further information hereon.

The invention is not limited to the above described preferred embodiments thereof. The rights sought are rather defined by the content of the following claims, within the scope of which many modifications can be envisaged.

## Claims

1. Housing (1), comprising a number of walls (2, 3, 4, 5, 6) which define an inner space in which an apparatus, such as a fluid sampler, is to be accommodated, wherein the walls are manufactured from a sandwich construction consisting of a core to which are fixed an inner wall (17, 18), which adjoins the internal space, and an outer wall (17, 18), wherein reinforcing elements (s) are arranged against the inner surface of the inner and the outer walls (17, 18) connecting onto the core such that they extend some distance from the inner surface into the core for the purpose of increasing the adhesion between the core and the inner and the outer walls (17, 18),
**CHARACTERISED IN THAT**
- the inner and outer walls (17, 18) of the wall are both made from a plastic material,
- the melting temperature of the material of the reinforcing elements (s) is practically equal to the melting temperature of the plastic material of the inner and outer walls, such that
- the reinforcing elements (s) retain their form but the outer ends fuse with at least one outer end to the relevant plastic wall.

2. Housing as claimed in claim 1, comprising one or more upright side walls (2, 3, 6), an upper wall (4) and a lower wall (5), wherein the inner walls and the outer walls of the side walls, the upper wall and/or the lower wall are formed integrally.

3. Housing as claimed in claim 1 or 2, wherein the reinforcing elements (s) are arranged against the inner surface of both the outer and the inner wall (17, 18) connecting to the core for the purpose of increasing the adhesion between the core and the inner and outer walls (17, 18).

4. Housing as claimed in any of the foregoing claims, wherein a cooling system is arranged in the inner space for holding the internal temperature in the inner space at an almost constant value between 2 and 10°C, and preferably between 2 and 5°C at a temperature outside the housing varying between -20 and +40°C.

5. Housing as claimed in any of the foregoing claims, comprising connecting means (8) extending through the sandwich construction for connecting a fluid feed to a fluid sampler placed in the housing.

6. Housing as claimed in any of the foregoing claims, comprising a core of polyurethane (PUR).

7. Housing as claimed in any of the foregoing claims, wherein the reinforcing elements (s) have an elongate form with a length between 0.5 cm and 4 cm, and preferably between 1 and 2 cm.

8. Housing as claimed in any of the foregoing claims, wherein the reinforcing elements (s) comprise chippings.

9. Housing as claimed in any of the foregoing claims, wherein the walls and preferably also the reinforcing elements (s) are manufactured from polyethylene (PE).

10. Method for manufacturing walls (2, 3, 4, 5, 6) of a housing (1), the housing (1) comprising a number of said walls (2-6), which walls (2-6) together define an inner space of the housing (1) in which an apparatus, such as a fluid sampler, is to be placed, wherein the walls (2-6) are manufactured from a sandwich construction, the method comprising of:- heating and molding in a mould a quantity of thermoplastic material for providing at least one inner wall (17, 18) and at least one outer wall (17, 18) of the thermoplastic material to enclose a core;
- in a plastic state of the thermoplastic material, distributing reinforcing elements (s) of elongate form over the inner surface of the inner and outer walls (17, 18);
- attaching the reinforcing elements (s) to the inner and outer walls (17, 18), such that parts thereof extend from the inner surface of the inner and outer walls;
- arranging filler material (v) between the inner and outer walls;
- arranging filler material (v) between the protruding reinforcing elements (s) so as to improve the adhesion of the filler material to the outer walls;
- fixing the outer and inner walls relative to each other by curing the filler material therebetween in order to form the housing,
**CHARACTERISED IN THAT**
- the melting temperature of the material of the reinforcing elements (s) is practically equal to the melting temperature of the material of the wall², and the reinforcing elements (s) retain their form but the outer ends fuse to the relevant plastic wall.

11. Method as claimed in claim 10, comprising of manufacturing integrally the upright side wall (s), the upper wall and/or the lower wall of the housing.

12. Method as claimed in claim 10 or 11, wherein during distribution of the reinforcing elements (s) over the inner surface of the relevant wall the reinforcing elements (s) have a temperature which is more than 100°C lower than the temperature of said wall.

13. Method as claimed in any of the foregoing claims 10-12, comprising of:
- arranging thermoplastic material in a mould (11, 12);
- distributing the thermoplastic material over the inner surface of the mould (11, 12);
- heating the thermoplastic material so as to form a first and second wall (17, 18);
- carrying the reinforcing elements (s) into the mould between the first wall and second wall (17, 18);
- distributing the reinforcing elements (v, s) over the inner surface of at least one of the walls;
- attaching the reinforcing elements (s) to the relevant wall or walls (17, 18);
- arranging filler material (v) in the mould between the walls (17, 18) and the protruding particles;
- fixing the walls (17, 18) relative to each other by curing the filler material therebetween so as to provide a sandwich wall element; and
- removing the sandwich wall element from the mould.

14. Method as claimed in any of the foregoing claims 10-13, wherein the step of attaching the reinforcing elements (s) to the wall or walls comprises of attaching one or more outer ends of the reinforcing elements (s) to the relevant wall or walls.

15. Method as claimed in any of the foregoing claims 10-14, wherein the walls and preferably also the reinforcing elements (s) are manufactured from polyethylene (PE).

16. Method as claimed in any of the foregoing claims 10-15, wherein the filler material (v) comprises polyurethane (PUR).

## Patentansprüche

1. Gehäuse (1), aufweisend eine Anzahl von Wänden (2, 3, 4, 5, 6), welche einen inneren Raum definieren, in dem eine Vorrichtung, zum Beispiel ein Fluid-Probenentnahmegerät, untergebracht werden soll, wobei die Wände aus einer Sandwich-Konstruktion hergestellt sind, welche aus einem Kern besteht, an welchem eine innere Wand (17, 18), welche an den inneren Raum angrenzt, und eine äußere Wand (17, 18) fixiert sind, wobei Verstärkungselemente (s) gegen die innere Fläche der inneren und der äußeren Wand (17, 18), welche mit den Kern verbunden sind, angeordnet sind, so dass sie sich eine Distanz von der inneren Fläche aus in den Kern hinein erstrecken, um eine Zunahme der Adhäsion zwischen dem Kern und der inneren und der äußeren Wand (17, 18) zu bezwecken, **dadurch gekennzeichnet, dass**
- die innere und der äußere Wand (17, 18) der Wand beide aus einem Kunststoffmaterial hergestellt sind,
- die Schmelztemperatur des Materials der Verstärkungselemente (s) praktisch bzw. so gut wie gleich der Schmelztemperatur des Kunststoffmaterials der inneren und der äußeren Wand ist, so dass
- die Verstärkungselemente (s) ihre Form beibehalten, aber die äußeren Enden sich mit zumindest einem äußeren Ende mit der entsprechenden Kunststoffwand verbinden.

2. Gehäuse wie in Anspruch 1 beansprucht, aufweisend eine oder mehrere aufrechte Seitenwände (2, 3, 6), eine obere Wand (4) und eine untere Wand (5), wobei die inneren Wände und die äußeren Wände der Seitenwände, der oberen Wand und/oder der unteren Wand integral ausgeformt sind.

3. Gehäuse wie in Anspruch 1 oder 2 beansprucht, wobei die Verstärkungselemente (s) gegen die innere Fläche von sowohl der äußeren als auch der inneren Wand (17, 18), welche mit dem Kern verbunden sind, mit dem Zweck angeordnet sind, die Adhäsion zwischen dem Kern und der inneren und der äußeren Wand (17, 18) zu erhöhen.

4. Gehäuse wie in irgendeinem der vorhergehenden Ansprüche beansprucht, wobei ein Kühlsystem im inneren Raum angeordnet ist, um die Innentemperatur im inneren Raum auf einem annähernd konstanten Wert zwischen 2 und 10°C zu halten, und vorzugsweise zwischen 2 und 5°C bei einer Temperatur außerhalb des Gehäuses, welche zwischen -20 und +40°C variiert.

5. Gehäuse wie in irgendeinem der vorhergehenden Ansprüche beansprucht, aufweisend ein Verbindungsmittel (8), welches sich durch die Sandwichkonstruktion hindurch erstreckt, um eine Fluidzuführung mit einem in dem Gehäuse platzierten Fluid-Probenentnahmegerät zu verbinden.

6. Gehäuse wie in irgendeinem der vorhergehenden Ansprüche beansprucht, aufweisend einen Kern aus Polyurethan (PUR).

7. Gehäuse wie in irgendeinem der vorhergehenden Ansprüche beansprucht, wobei die Verstärkungselemente (s) eine langestreckte Form mit einer Länge zwischen 0,5 cm und 4 cm haben, und vorzugsweise zwischen 1 und 2 cm.

8. Gehäuse wie in irgendeinem der vorhergehenden Ansprüche beansprucht, wobei die Verstärkungselemente (s) Späne aufweisen.

9. Gehäuse wie in irgendeinem der vorhergehenden Ansprüche beansprucht, wobei die Wände und vorzugsweise auch die Verstärkungselemente (s) aus Polyethylen (PE) hergestellt sind.

10. Verfahren zur Herstellung von Wänden (2, 3, 4, 5, 6) eines Gehäuses (1), das Gehäuse (1) aufweisend eine Anzahl der Wände (2-6), wobei die Wände (2-6) zusammen einen inneren Raum des Gehäuses (1) definieren, in welchem eine Vorrichtung, zum Beispiel ein Fluid-Probenentnahmegerät, platziert werden soll, wobei die Wände (2-6) aus einer Sandwichkonstruktion hergestellt werden, das Verfahren aufweisend:
- Erwärmen und Formen einer Menge von thermoplastischem Material in einer Form, um zumindest eine innere Wand (17, 18) und zumindest eine äußere Wand (17, 18) des thermoplastischen Materials bereitzustellen, um einen Kern zu umhüllen;
- in einem plastischen Zustand des thermoplastischen Materials, Verteilen von Verstärkungselementen (s) mit langgestreckter Form über die innere Fläche der inneren und der äußeren Wand (17, 18);
- Anbringen der Verstärkungselemente (s) an der inneren und der äußeren Wand (17, 18), so dass Teile davon sich von der inneren Fläche der inneren und der äußeren Wand aus erstrecken;
- Anordnen von Füllmaterial (v) zwischen der inneren und der äußeren Wand;
- Anordnen von Füllmaterial (v) zwischen den vorspringenden Verstärkungselementen (s), um die Adhäsion des Füllmaterials an den äußeren Wände zu verbessern;
- Fixieren der äußeren und der inneren Wand relativ zueinander durch Aushärten des Füllmaterials dazwischen, um das Gehäuse zu formen,
**dadurch gekennzeichnet, dass**
die Schmelztemperatur des Materials der Verstärkungselemente (s) praktisch bzw. so gut wie gleich der Schmelztemperatur des Materials der Wand ist und die Verstärkungselemente (s) ihre Form beibehalten, aber die äußeren Enden sich mit der entsprechenden Kunststoffwand verbinden.

11. Verfahren wie in Anspruch 10 beansprucht, aufweisend das integrale Herstellen der aufrechten Seitenwand, der oberen Wand und/oder der unteren Wand des Gehäuses.

12. Verfahren wie in Anspruch 10 oder 11 beansprucht, wobei während des Verteilens der Verstärkungselemente (s) über die innere Fläche der entsprechenden Wand die Verstärkungselemente (s) eine Temperatur haben, welche um mehr als 100°C niedriger als die Temperatur der Wand ist.

13. Verfahren wie in irgendeinem der vorhergehenden Ansprüche 10 -12 beansprucht, aufweisend:
- Anordnen des thermoplastischen Materials in einer Form (11, 12);
- Verteilen des thermoplastischen Materials über die innere Fläche der Form (11, 12);
- Erwärmen des thermoplastischen Materials, um eine erste und eine zweite Wand (17, 18) zu formen;
- Einbringen der Verstärkungselemente (s) in die Form zwischen die erste und die zweite Wand (17, 18);
- Verteilen der Verstärkungselemente (s) über die innere Fläche von zumindest einer der Wände;
- Anbringen der Verstärkungselemente (s) an der entsprechenden Wand oder den Wänden (17, 18);
- Anordnen des Füllmaterials (v) in der Form zwischen den Wänden (17, 18) und den vorspringenden Partikeln;
- Fixieren der Wände (17, 18) relativ zueinander durch Aushärten des Füllmaterials dazwischen, um ein Sandwich-Wandelement bereitzustellen; und
- Entfernen des Sandwich-Wandelements aus der Form.

14. Verfahren wie in irgendeinem der vorhergehenden Ansprüche 10-13 beansprucht, wobei der Schritt des Anbringens der Verstärkungselemente (s) an der Wand oder den Wänden das Anbringen eines oder mehrerer äußerer Enden der Verstärkungselemente (s) an der entsprechenden Wand oder den Wänden aufweist.

15. Verfahren wie in irgendeinem der vorhergehenden Ansprüche 10-14 beansprucht, wobei die Wände und vorzugsweise auch die Verstärkungselemente (s) aus Polyethylen (PE) hergestellt sind.

16. Verfahren wie in irgendeinem der vorhergehenden Ansprüche beansprucht, wobei das Füllmaterial (v) Polyurethan (PUR) aufweist.

## Revendications

1. Logement (1) comprenant un certain nombre de parois (2, 3, 4, 5, 6) qui définissent un espace intérieur dans lequel doit être reçu un appareil, tel qu'un échantillonneur de fluide, dans lequel les parois sont fabriquées à partir d'une construction en sandwich composée d'un noyau auquel sont fixées une paroi intérieure (17, 18), qui est contiguë à l'espace intérieur, et une paroi extérieure (17, 18), dans lequel des éléments de renforcement (s) sont agencés contre la surface intérieure des parois intérieure et extérieure (17, 18) en étant reliés au noyau de telle sorte qu'ils s'étendent sur une certaine distance à partir de la surface intérieure dans le noyau afin d'accroître l'adhérence entre le noyau et les parois intérieure et extérieure (17, 18),
**caractérisé en ce que** :
- les parois intérieure et extérieure (17, 18) de la paroi sont toutes deux réalisées dans un matériau de matière plastique ;
- la température de fusion du matériau des éléments de renforcement (s) est pratiquement égale à la température de fusion du matériau de matière plastique des parois intérieure et extérieure, de telle sorte que :
- les éléments de renforcement (s) conservent leur forme mais les extrémités extérieures fusionnent, au niveau d'au moins une extrémité extérieure, avec la paroi de matière plastique appropriée.

2. Logement selon la revendication 1, comprenant une ou plusieurs parois latérales droites (2, 3, 6), une paroi supérieure (4) et une paroi inférieure (5), dans lequel les parois intérieures et les parois extérieures des parois latérales, la paroi supérieure et/ou la paroi inférieure, sont formées d'une pièce.

3. Logement selon la revendication 1 ou 2, dans lequel les éléments de renforcement (s) sont agencés contre la surface intérieure des parois intérieure et extérieure (17, 18) en étant reliés au noyau afin d'accroître l'adhérence entre le noyau et les parois intérieure et extérieure (17, 18).

4. Logement selon l'une quelconque des revendications précédentes, dans lequel un système de refroidissement est agencé dans l'espace intérieur pour maintenir la température interne dans l'espace intérieur à une valeur presque constante comprise entre 2 °C et 10 °C, et de préférence entre 2 °C et 5 °C pour une température à l'extérieur du logement qui varie entre - 20 °C et + 40 °C.

5. Logement selon l'une quelconque des revendications précédentes, comprenant un moyen de liaison (8) s'étendant à travers la construction en sandwich, destiné à relier une alimentation en fluide à un échantillonneur de fluide placé dans le logement.

6. Logement selon l'une quelconque des revendications précédentes, comprenant un noyau de polyuréthane (PUR).

7. Logement selon l'une quelconque des revendications précédentes, dans lequel les éléments de renforcement (s) présentent une forme allongée dont la longueur est comprise entre 0,5 cm et 4 cm, et de préférence entre 1 cm et 2 cm.

8. Logement selon l'une quelconque des revendications précédentes, dans lequel les éléments de renforcement (s) comprennent des éclats.

9. Logement selon l'une quelconque des revendications précédentes, dans lequel les parois et de préférence également les éléments de renforcement (s) sont fabriqués à partir de polyéthylène (PE).

10. Procédé destiné à fabriquer les parois (2, 3, 4, 5, 6) d'un logement (1), le logement (1) comprenant un certain nombre desdites parois (2-6), lesquelles parois (2-6) définissent ensemble un espace intérieur du logement (1) dans lequel doit être placé un appareil, tel qu'un échantillonneur de fluide, dans lequel les parois (2-6) sont fabriquées à partir d'une construction en sandwich, le procédé comprenant :
- le chauffage et moulage dans un moule d'une quantité de matériau de matière thermoplastique pour fournir au moins une paroi intérieure (17, 18) et au moins une paroi extérieure (17, 18) de matériau de matière thermoplastique afin d'entourer un noyau ;
- dans un état plastique du matériau de matière thermoplastique, la répartition des éléments de renforcement (s) présentant une forme allongée sur la surface intérieure des parois intérieure et extérieure (17, 18) ;
- la fixation des éléments de renforcement (s) sur les parois intérieure et extérieure (17, 18), de telle sorte que des parties de ceux-ci s'étendent à partir de la surface intérieure des parois intérieure et extérieure ;
- l'agencement d'un matériau de remplissage (v) entre les parois intérieure et extérieure ;
- l'agencement d'un matériau de remplissage (v) entre les éléments de renforcement faisant saillie (s) de façon à accroître l'adhérence du matériau de remplissage sur les parois extérieures ;
- la fixation des parois intérieure et extérieure les unes aux autres en cuisant le matériau de remplissage entre elles afin de former le logement ;
**caractérisé en ce que** :
- la température de fusion du matériau des éléments de renforcement (s) est pratiquement égale à la température de fusion du matériau de la paroi, et les éléments de renforcement (s) conservent leur forme mais les extrémités extérieures fusionnent avec la paroi de matière plastique appropriée.

11. Procédé selon la revendication 10, comprenant la fabrication, d'une seule pièce, de la paroi latérale droite (s), de la paroi supérieure et/ou de la paroi inférieure du logement.

12. Procédé selon la revendication 10 ou 11, dans lequel, pendant la répartition des éléments de renforcement (s) sur la surface intérieure de la paroi appropriée, les éléments de renforcement (s) présentent une température qui est inférieure de plus de 100 °C à la température de ladite paroi.

13. Procédé selon l'une quelconque des revendications précédentes 10 à 12, comprenant :
- l'agencement d'un matériau de matière thermoplastique dans un moule (11, 12) ;
- la répartition du matériau de matière thermoplastique sur la surface intérieure du moule (11, 12) ;
- le chauffage du matériau de matière thermoplastique de façon à former une première et seconde paroi (17, 18) ;
- l'acheminement des éléments de renforcement (s) dans le moule entre la première et seconde paroi (17, 18) ;
- la répartition des éléments de renforcement (v, s) sur la surface intérieure de l'une au moins des parois ;
- la fixation des éléments de renforcement (s) sur la ou les parois appropriées (17, 18) ;
- l'agencement d'un matériau de remplissage (v) dans le moule entre les parois (11, 18) et les particules faisant saillie ;
- la fixation des parois (17, 18) les unes aux autres en cuisant le matériau de remplissage entre elles de façon à fournir un élément de paroi en sandwich ; et
- le retrait de l'élément de paroi en sandwich à partir du moule.

14. Procédé selon l'une quelconque des revendications précédentes 10 à 13, dans lequel l'étape de fixation des éléments de renforcement (s) sur la ou les parois, comprend la fixation d'une ou plusieurs extrémités extérieures des éléments de renforcement (s) sur la ou les parois appropriées.

15. Procédé selon l'une quelconque des revendications précédentes 10 à 14, dans lequel les parois et de préférence également les éléments de renforcement (s) sont fabriqués à partir de polyéthylène (PE).

16. Procédé selon l'une quelconque des revendications précédentes 10 à 15, dans lequel le matériau de remplissage (v) comprend du polyuréthane (PUR).
